# NOUVEAU FASCICULE DE BREVET EUROPEEN

(11) **EP 0 474 522 B2**
(45) Date de publication et mention de la décision concernant l'opposition: **16.09.1998**
(45) Mention de la délivrance du brevet: 11.01.1995
(21) Numéro de dépôt: 91402026.8
(22) Date de dépôt: 19.07.1991
(51) Int. Cl.: F16J 15/32

(54) **Bague d'étanchéité à lèvre**
Lippendichtungsring
Lip sealing ring

(30) Priorité: 20.07.1990 FR 9009332
(43) Date de publication de la demande: 11.03.1992
(73) Titulaire: PROCAL, Société anonyme dite, 52200 Langres (FR)
(72) Inventeur: Saxod, Michel, F-52200 Langres (FR)
(74) Mandataire: Leszczynski, André

(56) Documents cités:
- EP-A- 0 242 431
- EP-A- 0 276 441
- EP-B- 120 987
- DE-A- 1 233 683
- DE-A- 1 941 675
- DE-A- 2 047 631
- DE-A- 2 453 615
- DE-B- 1 270 903
- US-A- 2 743 950

## Description

La présente invention est relative à une bague d'étanchéité à lèvre destinée à réaliser une étanchéité aux fluides de pièces cylindriques mobiles en rotation ou en va-et-vient, en particulier à grande vitesse.

A titre d'exemples de bagues selon l'invention on peut citer les bagues de type radial montées dans un alésage de carter et destinées à réaliser l'étanchéité du montage d'un arbre tournant dans le carter. De telles bagues de type radial trouvent de nombreuses applications, notamment dans les moteurs de véhicules automobiles.

A titre d'autres exemples de bagues selon l'invention, on peut citer les joints d'étanchéité de queues de soupape de moteurs de véhicules automobiles, ou les joints d'étanchéité d'un piston dans un cylindre, notamment dans les vérins.

Les bagues d'étanchéité à lèvre comportent habituellement une armature métallique sur laquelle est adhérisé un corps, généralement en élastomère, formant lèvre d'étanchéité et conformé avec une arête d'étanchéité venant au contact de la pièce, par exemple un arbre tournant ou une tige ou un piston mobile en va-et-vient, autour de laquelle une étanchéité doit être réalisée.

Il est en général prévu un ressort de type jarretière destiné à appliquer l'arête d'étanchéité de la lèvre contre la pièce correspondante.

Le corps en élastomère formant la lèvre d'étanchéité peut également comporter une ou plusieurs parties en saillie formant lèvres secondaires notamment une lèvre anti-poussière.

On connaît par DE 194/675 une manchette en matériau élastomère présentant un corps non symétrique de révolution.

On connaît par US 3 601 418 une bague comportant un corps en élastomère adhérisé sur une armature métallique; ce corps comporte un renflement annulaire.

On connait par EP-A-0 276 441 une bague d'étanchéité à lèvre comportant une armature additionnelle formant contrepoids et destinée à compenser l'effort d'accélération agisant sur la lèvre d'étanchéité et dont la force, due à la masse, correspond au moins à celle de la lèvre d'étanchéité et du ressort agissant sur elle.

Cette armature additionnelle constitue un ensemble d'équilibrage destiné à empêcher un soulèvement de la lèvre d'étanchéité.

Le frottement en cours de fonctionnement entre l'arête d'étanchéité de la lèvre et la pièce mobile en regard est en général limité par la présence d'une pellicule du fluide, notamment de l'huile, vis-à-vis duquel l'étanchéité doit être réalisée.

Il arrive cependant dans de nombreux cas, notamment au moment du démarrage, que l'arête d'étanchéité frotte à sec contre la pièce en regard, ce frottement engendrant des vibrations de la lèvre d'étanchéité qui, dans certaines conditions peut entrer en résonance et se détruire rapidement.

L'armature additionnelle prévue dans EP-A-0 276 441 ne modifie pas les caractéristiques de frottement de l'arête d'étanchéité, notamment lors du démarrage.

La présente invention se propose de réaliser une bague d'étanchéité à lèvre permettant, par des moyens particulièrement simples et économiques, de modifier le régime vibratoire engendré par le frottement de l'arête d'étanchéité de la lèvre sur la pièce mobile en regard évitant ainsi une usure prématurée et une destruction de la lèvre d'étanchéité de la bague.

La bague selon l'invention se caractérise comme défini dans la partie caractérisé de la revendication 1.

De préférence, il est prévu un nombre impair d'éléments formant masselottes répartis circonférentieilement sur la lèvre d'étanchéité.

La masse, la forme et les dimensions des éléments formant masselottes peuvent être différentes sur une même bague en fonction des caractéristiques recherchées.

Selon le cas, la répartition des éléments formant masselottes sur une même bague peut être régulière ou irrégulière et ces éléments peuvent être disposés dans un même plan ou dans des plans différents.

Les caractéristiques des éléments formant masselottes peuvent être déterminées mathématiquement ou expérimentalement pour obtenir les caractéristiques de régime vibratoire désirées pour un fonctionnement de la bague dans des conditions déterminées.

Dans le but de mieux faire comprendre l'invention, on va maintenant en décrire à titre d'exemple nullement limitatif deux modes de réalisation en se référant au dessin annexé dans lequel :
- la figure 1 est une vue en demi-coupe d'une bague de type radial selon l'invention,
- la figure 2 est une vue analogue d'une bague formant joint d'étanchéité de queue de soupape.

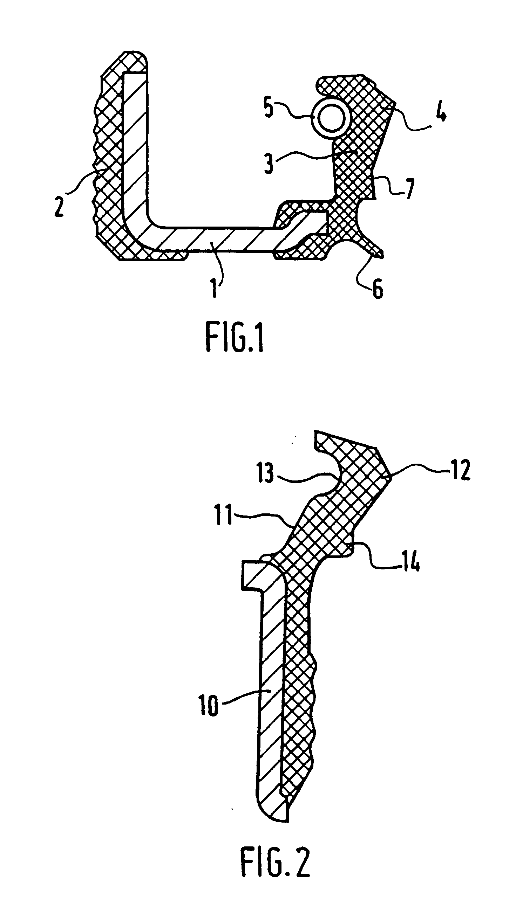

La bague de type radial illustrée sur la figure 1 est d'une construction classique comportant une armature annulaire 1 de section sensiblement en forme de L sur l'une des branches de laquelle est adhérisée une garniture 2, généralement en élastomère permettant l'emmanchement à ajustement serré de la bague dans un alésage de carter (non représenté).

A l'extrémité de l'autre branche de l'armature est adhérisé un corps en élastomère constituant la lèvre d'étanchéité 3 et présentant une zone 4 conformé en arête d'étanchéité pour venir en contact avec un arbre tournant (non représenté) monté dans le carter.

L'arête d'étanchéité 4 est repoussée contre l'arbre par un ressort jarretière 5. Dans l'exemple illustré, il est également prévu une lèvre d'étanchéité secondaire anti-poussière 6.

Selon l'invention, il est prévu sur la lèvre d'étanchéité 3 une pluralité d'éléments allongés en saillie 7 venus de moulage avec la lèvre d'étanchéité et répartis circonférentiellement sur une portée de la lèvre située entre la zone 4 d'arête d'étanchéité et la lèvre anti-poussière 6.

Les éléments 7 constituent des surépaisseurs localisées de la lèvre d'étanchéité et agissent en tant que masselottes évitant les vibrations susceptibles de provoquer l'entrée en résonnance de la bague par suite d'un frottement à sec de l'arête d'étanchéité contre l'arbre tournant.

A titre d'exemple, pour une bague conçue pour assurer l'étanchéité d'un arbre de 90 mm de diamètre logé dans un alésage de carter de 110 mm de diamètre, il est prévu quinze éléments 7 présentant chacun une longueur d'environ 10 mm dans le sens circonférentiel et faisant saillie sur une hauteur de 1 mm par rapport à la surface de la lèvre d'étanchéité sur laquelle ils sont réalisés.

Bien entendu, l'exemple illustré n'est nullement limitatif et en fonction des modifications de régime vibratoire recherchées, les éléments 7 peuvent être réalisés en d'autres emplacements de la lèvre d'étanchéité 3, notamment sur la partie de la lèvre d'étanchéité située du côté du fluide à étancher (en haut sur le dessin) ou encore sur la face de la lèvre opposée à celle sur laquelle est réalisée l'arête d'étanchéité 4.

Les éléments 7, selon les besoins peuvent être de même longueur ou non et équiangulairement espacés ou non.

On a illustré sur la figure 2, un joint de queue de soupape de moteur de véhicule automobile, de conception classique, comportant une armature généralement cylindrique 10 destinée à s'engager sur l'extrémité du corps de soupape (non représentée). Sur l'armature est adhérisé un corps 11 en élastomère formant lèvre d'étanchéité et comportant une partie d'arête d'étanchéité 12 destinée à venir au contact d'une queue ou tige de soupape (non représentée mobile en translation en va-et-vient.

Un ressort jarretière (non représenté) logé dans une gorge 13 du corps est prévu pour repousser l'arête d'étanchéité contre la queue de soupape.

Selon l'invention, il est prévu une pluralité d'éléments allongés en saillie 14 répartis circonférentiellement et disposés sur une surface de la lèvre se trouvant entre l'arête d'étanchéité 12 et la partie de la lèvre adhérisée à l'armature 10.

Bien entendu, l'invention n'est pas limitée à cette disposition et les éléments en saillie 14 peuvent être réalisés sur d'autres surfaces de la lèvre d'étanchéité.

Dans un exemple de réalisation pour une queue de soupape d'un diamètre extérieur de 7 mm, il est prévu cinq saillies formant masselottes, équiangulairement réparties, présentant chacune une longueur en sens circonférentiel de 1,5 mm et une hauteur par rapport à la surface correspondante de la lèvre d'étanchéité de 1 mm.

Bien que l'invention ait été décrite en liaison avec des modes de réalisation particuliers, il est bien évident qu'elle n'y est nullement limitée et qu'on peut lui apporter de nombreuses variantes et modifications tant en ce qui concerne le nombre et la forme des éléments formant masselottes que leur disposition sur la lèvre d'étanchéité, que ces éléments soient réalisés en saillie ou en creux sur la lèvre.

## Revendications

1. Bague d'étanchéité à lèvre comportant une armature métallique sur laquelle est adhérisé un corps, notamment en élastomère, formant lèvre d'étanchéité, et conformé avec une arête d'étanchéité venant au contact d'une pièce cylindrique mobile en rotation ou en va-et-vient autour de laquelle une étanchéité doit être réalisée, caractérisée par le fait que ledit corps formant lèvre d'étanchéité comporte en au moins un emplacement de sa surface (3,11) autre que l'arête d'étanchéité (4,12) et sans contact avec la pièce cylindrique mobile, au moins un élément formant masselotte (7,14) venu de moulage d'un seul tenant avec ledit corps, agissant par inertie pour modifier le régime vibratoire engendré par le frottement de l'arête d'étanchéité sur la pièce mobile et empêcher le corps formant lèvre d'étanchéité d'entrer en résonnance, ou chaque élément formant masselotte étant réalisé par une partie en saillie ou en creux d'au moins une surface de la lèvre d'étanchéité, le ou chaque élément formant masselotte s'étendant angulairement sur une partie seulement de la circonférence de la lèvre.

2. Bague d'étanchéité à lèvre selon la revendication 1, caractérisée par le fait qu'elle comporte un nombre impair d'éléments formant masselottes (7,14) répartis circonférentiellement sur la lèvre d'étanchéité.

3. Bague d'étanchéité à lèvre selon l'une quelconque des revendications précédentes, caractérisée par le fait que le ou les éléments formant masselottes (7,14) présentent une section triangulaire.

4. Bague d'étanchéité à lèvre selon l'une quelconque des revendications précédentes, caractérisée par le fait qu'elle est conformée en bague de type radial pour assurer l'étanchéité d'un arbre tournant dans l'alésage d'un carter.

5. Bague d'étanchéité à lèvre selon l'une quelconque des revendications 1 à 3, caractérisée par le fait qu'elle est conformée en joint de queue de soupape pour assurer l'étanchéité d'une queue de soupape de moteur de véhicule automobile.

## Claims

1. Sealing ring with lip comprising a metal reinforcement, to which is bonded, notably of elastomer, forming a sealing lip and shaped with a sealing arris coming into contact with a rotatably or reciprocally movable cylindrical component, about which a seal is to be made, characterized by the fact that said body forming a sealing lip comprises, at at least one position on its surface (3, 11) other than the sealing arris (4, 12), and without contact with the movable cylindrical component at least one element forming a fly-weight (7, 14) moulded in one piece with said body, acting by inertia to modify the vibratory regime caused by the friction of the sealing arris on the movable component and preventing the body forming a sealing lip to go in resonance, the or each element forming a fly-weight being formed of a projection or recessed portion of at least one surface of the sealing lip, the or each element forming a fly-weight extending angularly on a part only of the periphery of the lip.

2. Sealing ring with lip according to Claim 1, characterized by the fact that it comprises an uneven number of elements forming fly-weights (7, 14) distributed circumferentially on the sealing lip.

3. Sealing ring with lip according to any one of the preceding Claims, characterized by the fact that the element or elements forming fly-weights (7, 14) have a triangular cross-section.

4. Sealing ring with lip according to any one of the preceding Claims, characterized by the fact that it is shaped as a ring of the radial type for assuring sealing of a shaft revolving in the bore of a casing.

5. Sealing ring with lip according to any one of Claims 1 to 3, characterized by the fact that it is shaped as a seal for a valve stem for assuring the sealing of a valve stem for an automobile engine.

## Patentansprüche

1. Lippendichtungsring mit Metallbewehrung, an der ein Körper, insbesondere aus Elastomer, befestigt ist, der die Dichtlippe bildet und mit einer Dichtkante versehen ist, die mit einem drehbaren oder hin und her bewegbaren zylindrischen Teil, um das herum Dichtheit erzielt werden soll, in Berührung steht, dadurch gekennzeichnet, daß der die Dichtlippe bildende Körper an mindestens einer von der Dichtkante (4, 12) verschiedenen und mit dem bewegbaren zylindrischen Teil nicht in Berührung stehenden Stelle seiner Oberfläche (3, 11) mindestens einen vom Formungsvorgang herrührenden, am Körper angeformten Anguß (7, 14) aufweist, der durch Trägheitswirkung das durch Reibung der Dichtkante an dem bewegbaren Teil erzeugte Schwingungsverhalten modifiziert und verhindert, daß der die Dichtlippe bildende Körper in Resonanz gerät, wobei der bzw. jeder Anguß von einem vorspringenden oder eingezogenen Bereich mindestens einer Oberfläche der Dichtlippe gebildet ist und im Winkel nur über einen Teil des Lippenumfangs verläuft.

2. Lippendichtungsring nach Anspruch 1, dadurch gekennzeichnet, daß er eine ungerade Anzahl von in Umfangsrichtung über die Dichtlippe verteilten Angüsse (7, 14) aufweist.

3. Lippendichtungsring nach einem der vorhergehenden Ansprüche, dadurch gekennzeichnet, daß der oder die Angüsse (7, 14) dreieckigen Querschnitt aufweisen.

4. Lippendichtungsring nach einem der vorhergehenden Ansprüche, dadurch gekennzeichnet daß er als Radialring ausgebildet ist, um Dichtheit einer sich in der Bohrung eines Gehäuses drehenden Welle zu gewährleisten.

5. Lippendichtungsring nach einem der Ansprüche 1 bis 3, dadurch gekennzeichnet, daß er als Dichtung für einen Ventilschaft ausgebildet ist, um Dichtheit eines Ventilschafts in einem Kraftfahrzeugmotor zu gewährleisten.
